(19) Europäisches Patentamt
European Patent Office
Office européen des brevets

(11) EP 2 500 326 A1

(12) **EUROPEAN PATENT APPLICATION**

(43) Date of publication:
**19.09.2012 Bulletin 2012/38**

(51) Int Cl.:
***C02F 5/10*** *(2006.01)*

(21) Application number: **12171984.3**

(22) Date of filing: **11.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.11.2007 US 987652 P**

(62) Document number(s) of the earlier application(s) in accordance with Art. 76 EPC:
**08850586.2 / 2 215 022**

(71) Applicant: **Akzo Nobel N.V.**
**6824 BM Arnhem (NL)**

(72) Inventors:
- **Sanders, Jannifer**
  **HIXSON, TN Tennessee 37343 (US)**
- **Holt, Stuart Peter Robert**
  **CHICAGO, IL Illinois 60657 (US)**
- **Rodrigues, Klin A.**
  **SIGNAL MOUNTAIN, TN Tennessee 37377 (US)**

(74) Representative: **De Vries, Adriaan Jacobus**
**Akzo Nobel N.V.**
**Legal, IP & Compliance**
**P.O. Box 9300**
**6800 SB Arnhem (NL)**

Remarks:
This application was filed on 14-06-2012 as a divisional application to the application mentioned under INID code 62.

(54) **Methods of minimizing sulfate scale in oil field**

(57) Methods of controlling barium sulfate scale in oil field applications are disclosed. These methods involve the application of one or more polyether carboxylate to an aqueous system in the oil field.



Printed by Jouve, 75001 PARIS (FR)

## Description

## BACKGROUND OF THE INVENTION

Field of the Invention. The present invention relates to methods of controlling sulfate scale in the oil field. More particularly, the present invention is directed towards methods of minimizing sulfate scale in aqueous systems in the oil field by use of carboxylated oligomers.

Background Information. Subterranean oil recovery operations often involve the injection of aqueous solutions into an oil formation to help move the oil through the formation, as well as to maintain pressure in the reservoir as the oil and other fluids are recovered. Injected production water, which can be either fresh water (*e.g.*, lake or river) or seawater (for offshore operations), can contain soluble salts such as sulfates and carbonates. These salts may be incompatible with ions already found in the oil-containing reservoir or formation. Water in the formation may contain higher concentrations of ions typically encountered at much lower levels in normal surface water, such as strontium, barium, zinc and calcium. Partially soluble inorganic salts such as barium sulfate and calcium carbonate often precipitate from the production water as conditions affecting solubility (*e.g.*, temperature and pressure) change within the producing well bores and topsides. This is especially prevalent when incompatible waters are encountered between the formation water and produced water.

Barium sulfate and strontium sulfate salts form very hard, often insoluble scales that are difficult to prevent. Barium and strontium sulfate salts often co-precipitate with radium sulfate salt, making the scale mildly radioactive and introducing handling difficulties. Unlike common calcium salts, which have an inverse solubility based on temperature, barium, strontium and radium sulfate salt solubility is lowest at low temperatures. This is particularly problematic in processing oil, where the temperature of the fluids in the formation (*e.g.*, water, oil and gas mixtures/emulsions) decreases as they are removed from the formation. In modern extraction techniques the temperature of produced fluids may drop, for example, to as low as 5°C, and also be contained in production tubing for periods of 24 hours or longer.

Should scale occur, calcium carbonate can be readily removed via HCl acid washing. This can be performed topside or downhole, is relatively inexpensive and is non-invasive. However, dissolution of sulfate scales is difficult (requiring high pH, long contact times, heat and circulation) and can only be performed topside. Alternatively, milling and, in some cases, high-pressure water washing can be used. These are expensive and invasive procedures that require process shutdown. Inhibition, therefore, is a key approach to eliminating or minimizing sulfate scale, especially downhole.

Barium sulfate or other inorganic supersaturated salts can precipitate within an oil reservoir formation forming scale, thereby clogging the formation and restricting the recovery of oil from the reservoir. Insoluble salts may also precipitate onto production tubing surfaces and associated extraction equipment, limiting productivity and production efficiency, as well as compromising safety. Certain oil-containing formation waters are known to contain barium concentrations of 400 ppm and higher. Since barium sulfate forms a particularly insoluble salt, the solubility of which declines rapidly with a decline in temperature of the produced fluids, it is difficult to inhibit scale formation that results in plugging of the oil formation and topside processes and safety equipment.

While "scale inhibition" and "deposit control" are generic terms without mechanistic implications, there are three generally accepted mechanisms for controlling the amount of divalent metal ions fouling or depositing in the surface of the formation. These are: 1) inhibiting precipitation of the material from the process water, 2) dispersing the material once it has formed in order to prevent it from attaching to the surfaces, and/or 3) modifying the growing crystal morphology so that the crystals do not adhere to surfaces. The exact mechanism by which a particular scale inhibitor functions and the interplay between these three (or other) mechanisms is not well understood. Compositions according to the present invention may operate by any one or combination of all of these routes.

Current methods for inhibiting barium sulfate scaling, such as described in U.S.

Patent Nos. 6,063,289 and 6,123,869, involve the use of expensive organic phosphonic acids. It is also known to use acrylic polymer scale inhibitors containing a phosphino or phosphono moiety. Still, there is a need for sulfate scale control agents which are inexpensive and effective at low concentration levels.

## SUMMARY OF THE INVENTION

The present invention is directed towards methods of controlling sulfate scale, particularly barium sulfate scale, in oil field applications. According to one embodiment, this is accomplished by use of a carboxylated oligomer of the structure -

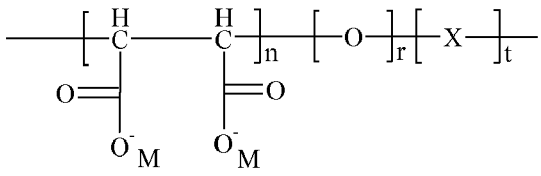

where X is COOM; M is H or a cation; n is 1 to 20; and r and t are independently 1 or 0. Examples of useful carboxylated oligomers include polymaleic acid and polyether carboxylates. The invention is directed towards a method of controlling scale in an aqueous system wherein at least one carboxylated oligomer is added to the aqueous system. The oligomer can be added to the system at a concentration of about 20 mg/ml or greater. The scale minimized includes halite, calcium sulfate, barium sulfate, strontium sulfate, iron sulfide, lead sulfide, zinc sulfide, calcium silicate or mixtures thereof.

According to the present invention, scale can be controlled in an aqueous system by adding to the aqueous system at least one carboxylated oligomer having the structure -

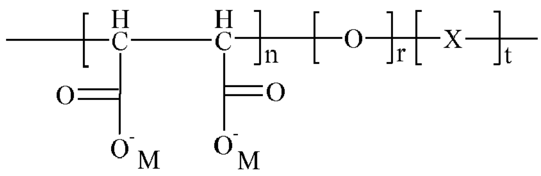

where X is COOM, M is H or a cation, n is 1 to 20, and r and t are independently 1 or 0; wherein the concentration of the at least one carboxylated oligomer in the aqueous system is about 20 ppm or greater, and wherein the scale controlled is at least barium sulfate scale.

In one aspect, the at least one carboxylated oligomer can be chosen from polymaleic acid or polyether carboxylate or mixtures thereof.

Examples of aqueous systems wherein the present invention is useful includes an oil field. Oil fields or other aqueous systems wherein scale is to be controlled can include, for example, brine. When the aqueous system is an oilfield, the at least one carboxylated oligomer can be added topside to production water. In another aspect, the production water containing the at least one carboxylated oligomer can be reinjected into the oil field. In one aspect, the at least one carboxylated oligomer can be introduced into the aqueous system in a carrier fluid. An example of a useful carrier fluid would be methanol.

The pH of the aqueous system can vary from about 2 to about 10.

In another aspect, the at least one carboxylated oligomer can be introduced into the aqueous system as an aqueous solution that is free of precipitate.

The present invention also provides a method of neutralizing a polymaleic acid aqueous solution containing greater than 0.1 weight percent maleic acid by diluting the polymaleic acid solution to less than 30 percent solids by weight, based on total weight of the polymaleic acid solution and adding an at least 45 weight percent alkaline hydroxide solution to the polymaleic acid solution. Alternatively, an alkaline hydroxide solution having less than 30 percent solids can be added to the polymaleic acid solution, wherein the polymaleic acid solution has greater than 40 percent solid. In even another embodiment, an amine can be added to the polymaleic acid solution so that the pH of the final solution is 2 or greater and the final solution does not have a precipitate.

This method of neutralizing a polymaleic acid aqueous solution can result in the neutralized solution being free of precipitate or solids.

In one aspect, the alkaline hydroxide can be sodium or potassium hydroxide. Examples of useful amines include ammonia, monoethanolamine, diethanolamine, triethanolamine, pyridine, piperazine, 2-amino-2-methyl-1-propanol and mixtures thereof.

In a further step, the neutralized solution can be added to an aqueous system. The aqueous system may contain brine. In one aspect, the brine may contain at least 35 grams per liter of salt. The neutralized solution may be added to the aqueous system to, for example, inhibit scale. Examples of scale that may be inhibited include halite, calcium sulfate, barium sulfate, strontium sulfate, iron sulfide, lead sulfide, zinc sulfide, calcium silicate and mixtures thereof.

In one aspect, the concentration of the neutralized polymaleic acid solution in the aqueous system may be about 20 ppm or greater.

Sulfate scale control applications can occur in a pH range of from 2 to 10. Polymaleic acid solutions tend to form a precipitate when neutralized by a 50% sodium hydroxide solution. Thus there is a need to overcome the problem of precipitation when polymaleic acid solutions are neutralized. One embodiment of this invention is a method for neutralizing polymaleic acid that prevents this precipitation problem. Another embodiment includes methods of using this neutralized polymaleic product for sulfate scale control.

## DETAILED DESCRIPTION OF THE INVENTION

Scale inhibitors in the oil field are typically used in production wells to stop scaling. Scaling can occur in aqueous systems in reservoir rock formation matrices, and/or in production lines both downhole and at the surface. Scaling not only restricts pore size in the reservoir rock formation matrix (also known as 'formation damage'), thereby reducing the rate of oil and/or gas production, but also blocks tubular and pipe equipment during surface processing. Aqueous systems include, for example, cooling water systems, water flood systems and produced water systems. The aqueous environment can also be found in crude oil systems or gas systems and may be deployed downhole, topside, pipeline or during refining. Aqueous systems can include $CO_2$, $H_2S$, $O_2$, brine, condensed water, crude oil, gas condensate, or any combination of these or other species.

Polymers containing carboxylic acid groups are generally known to be good calcium carbonate scale inhibitors. However, calcium carbonate scale inhibitors typically do not provide good sulfate scale control. For example, polyacrylic acid and its salts are good calcium carbonate inhibitors, yet they are not effective at inhibiting barium sulfate scale. Barium sulfate scale is commonly encountered in oil field applications. Moreover it is a hard scale that is difficult to remove, necessitating a need for improved barium sulfate scale control agents.

Scale inhibiting materials according to the present include carboxylated oligomers of the following structure -

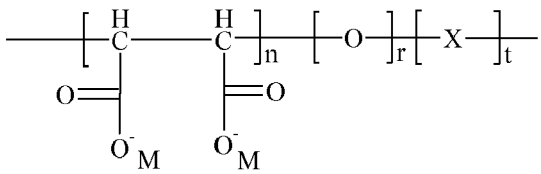

where X is COOM; M is H or a cation; n is 1 to 20; and r and t are independently 1 or 0. Examples of such carboxylated oligomers include polymaleic acid where r and t are 0, and polyether carboxylates where r is 1. In one embodiment, carboxylated oligomers of this invention have an average number of repeat units per chain of 20 or less (*i.e.,* n is 1 to 20). In another embodiment, they have an average number of repeat units per chain of 10 or less. In even another embodiment, n is 1 to 6. Carboxylated oligomers according to the present invention can be used for minimization or control of scale commonly found in the oil field, such as halite, calcium sulfate, barium sulfate, strontium sulfate, iron sulfide, lead sulfide, zinc sulfide, calcium silicate and mixtures thereof. (Halite is the mineral form of sodium chloride, commonly known as rock salt.)

For the purpose of this invention, a polyether carboxylate is defined as an oligomer having an ether linkage (*i.e.,* r = 1) and carboxylic acid functionality. Polyether carboxylates include oligomers such as polyepoxy succinic acid, 2,2-dioxysuccinic acid, carboxymethyl oxysuccinic acid, epoxy succinic acid and its salts. Polyepoxy succinic acids are described, for example, in U.S. Patent No. 4,654,159. An example of a process for producing 2,2-dioxysuccinic acid and carboxymethyl oxysuccinic acid and its salts is described in U.S. Patent No. 5,030,751.

Polymaleic acids include oligomers of maleic acid with typical repeat units of 1 to 20. A repeat unit is defined as the monomeric unit. In the case of polymaleic acid, the repeat unit is maleic acid. Polymaleic acids can also include maleic acid oligomers having repeat units of 2 to 12, as well as oligomers having repeat units of 4 to 10. These maleic acid oligomers may optionally incorporate a comonomer. The optional comonomers can be water soluble, and may comprise about 30 weight percent or less of the polymaleic acid. In another aspect, these optional comonomers comprise about 10 weight percent or less of the polymer. In even another aspect, these optional comonomers are absent from the polymer.

Carboxylated oligomers materials can be made by solvent-based process or by aqueous process (see, e.g., U.S. Patent Nos. 6,020,297, 5,135,677; 5,064,563; 4,519,920; 4,555,557; 4,668,735; 4,589,995; and 4,659,793). The starting point is usually maleic anhydride, which hydrolyzes to maleic acid in water. The pH of the aqueous system in the end use application is preferably in the range of about 2 to about 10. In one aspect, the aqueous system pH is in the range of about 4 to about 8. In another aspect, the aqueous system pH is in the range of about 5 to about 7.

Polymaleic acids are typically produced at very low pH (typically < 1), and can have a solids content of 40 percent or higher. Therefore, the polymaleic acid should preferably be neutralized before it is used in scale control applications. However, this is problematic in that polymaleic acid forms a precipitate when neutralized with, for example, a 50% sodium hydroxide solution. It is difficult to use neutralized polymaleic in its precipitated or slurry form in the oil field. Therefore, the neutralized or partially neutralized polymaleic acid is preferably a homogenous solution substantially free of any precipitate. The polymaleic acid aqueous solutions have high residual amounts of maleic acid. The level of

maleic acid can be about 0.1 weight percent or higher, and is typically about 0.5 to about 1 weight percent and higher. The precipitate that forms is an alkaline metal salt of the maleic acid, such as sodium maleate. The polymaleic acid solution needs to be neutralized preferably to a pH greater than about 2, more preferably to a pH greater than about 4 without forming a precipitate. This precipitate can be avoided and a neutralized polymaleic acid solution may be produced by diluting the aqueous solution to 30% or lower solids when neutralizing with an alkaline hydroxide solution. For the purposes of this disclosure, alkaline hydroxide is defined as both alkali metal hydroxides such as Na and K hydroxide, and alkaline earth metal hydroxides such as Ca and Mg hydroxide. Alternatively, the alkaline hydroxide solution can be diluted to 30% or lower and then added to the polymaleic acid solution. Additionally, the precipitate can be avoided by neutralizing the polymaleic acid with an amine. Useful amines include, for example, ammonia, monoethanolamine, diethanolamine, triethanolamine, pyridine, piperazine, 2-amino-2-methyl-1-propanol and mixtures thereof. In one aspect, the amines used are ammonia and/or triethanol amine. One skilled in the art will recognize that the amount of neutralizing agent needed depends on the pH that the polymaleic acid solution needs to be adjusted to. The polymaleic acid solution is usually neutralized to a pH of about 2 to 10. The higher the final pH the higher the amount of neutralizing agent needed to achieve that pH.

One embodiment of this invention is directed towards a process for neutralizing polymaleic acid. The neutralized polymaleic acid solution may then be added to an aqueous system in the oil field for control of barium sulfate scale.

Crosslinking of polymaleic acid may also lead to precipitation. Hence, it is preferred that the polymaleic acid not be crosslinked. Additionally, the presence of maleic anhydride may cause insolubility which is undesired. Therefore, according to one embodiment of the invention the polymaleic acid is substantially free of maleic anhydride moieties.

In one embodiment according to the present invention, there is provided a method of inhibiting scaling in an aqueous system, the method comprising the step of adding a carboxylated oligomer to the aqueous system. The pH of the aqueous system is preferably in the range 2 to 10 and more preferably in the range 4 to 8 and most preferably in the range 5 to 7. The scale inhibitor may be injected or squeezed as decribed later on or may be added topside to the produced water. The invention also provides a mixture of the carboxylated oligomer and a carrier fluid. The carrier fluid may be water, glycol, alcohol or oil. Preferably the carrier fluid is water or brines or methanol. Methanol is often used to prevent the formation of water methane ice structures downhole.

In another embodiment of this invention, the carboxylated oligomers of this invention, specifically the polymaleic acids are soluble in methanol. Thus the scale inhibiting materials can be introduced in to the well bore in the methanol line. This is particularly advantageous since there is fixed number of lines that run in to the wellbore and this combination eliminates the need for another line.

Carboxylated oligomers of this invention may be deployed continuously or intermittently in a batch-wise manner. The concentration of the carboxylated oligomer in the aqueous system is 100 ppm or greater, more preferably 50 ppm or greater and most preferred would be 20 ppm or greater. For the purposes of this disclsoure, inhibition is considered acceptable if the percent inhibition is 80 or greater.

In a preferred embodiment, carboxylated oligomers of this invention are added topside and/or in a squeeze treatment. In the latter, which is also called a "shut-in" treatment, the scale inhibitor is injected into the production well, usually under pressure, and "squeezed" into the formation and held there. In the squeeze procedure, scale inhibitor is injected several feet radially into the production well where it is retained by adsorption and/or formation of a sparingly soluble precipitate. The inhibitor slowly leaches into the produced water over a period of time and protects the well from scale deposition. The "shut-in" treatment should be done in a regular manner (e.g., one or more times a year) if high production rates are to be maintained and constitutes the "down time" when no production takes place.

Often the water encountered in oil field applications is sea water or brines from the formation and therefore can be very brackish. Hence, the scale control additives need to be soluble in many brines and brackish waters. These brines may be sea water which contains about 3.5 percent NaCl by weight or more severe brines that contain for example up to 3.5% KCl, up to 25% NaCl and up to 20% $CaCl_2$. Therefore, the carboxylated oligomers have to be soluble in these systems for them to be effective say as scale inhibitors. One of the systems frequently encountered in the oil field is sea water. In one embodiment, the carboxylated oligomers are soluble at 5 to 1000 ppm levels in sea water and more preferably at 10,000 or 100,000 ppm, levels. In a preferred embodiment, the carboxylated oligomers are soluble at 5 to1000 ppm levels in moderate calcium brine and more preferably at 10,000 or 100,000 ppm, levels. In the most preferred embodiment, the carboxylated oligomers are soluble at 5 to1000 ppm levels in severe calcium brine and more preferably at 10,000 or 100,000 ppm, levels. The lower the pH of the carboxylated oligomer, the better the brine compatibility. The composition of synthetic seawater, moderate and severe calcium brines which are typical brines encountered in the oilfield is listed in Table 1 below.

Table 1 - Typical brines encountered in the oilfield

| Brine Preparation | | | | | | | |
|---|---|---|---|---|---|---|---|
| Brine number and description | | Grams per Liter (g/L) | | | Parts per Million (ppm) | | |
| | | NaCl | $CaCl_2 \cdot 2H_2O$ | $MgCl_2 \cdot 6H_2O$ | Na | Ca | Mg |
| 1 | Synthetic seawater | 24.074 | 1.61 | 11.436 | 9471 | 439 | 1368 |
| 2 | Moderate calcium brine | 63.53 | 9.19 | | 24992 | 2506 | 0 |
| 3 | Severe calcium brine | 127.05 | 91.875 | | 49981 | 25053 | 0 |

As described in Table 1, sea water contains around 35 g/L of a mixture of salts. The moderate and severe calcium brines contain around 70 and 200 g/L of a mixture of salts, respectively.

A carboxylate oligomer useful in the present invention is polyepoxy succinic acid and its salts. Processes for producing this material are described, for example, in U.S. Patent No. 4,654,159, as well as elsewhere. Typical processes use a high amount of caustic and calcium hydroxide to produce an end product that is at very high pH (12 or greater). This product is not soluble in brines used in typical oil field applications, such as are described above. In order to improve compatibility in oil field brines, the pH of the mixed sodium and calcium salt of the polyepoxysuccinate needs to be lowered using acids. Useful acids include mineral acids like sulfuric acid or hydrochloric acid, or organic acids such as citric acid, lactic acid and glycolic acid. In general, the acids can be used to lower the pH to about 9, and possibly down to 7. However, lowering the pH further may result in a precipitate being formed over a period of several weeks.

In order to further describe the methods of this invention and to facilitate a clear understanding thereof, the following non-limiting examples are provided.

<u>Example 1</u> -

40 grams of a polymaleic sample having 43% solids and 8% residual maleic acid and a pH of 0.77 was neutralized with a 50% NaOH solution. The NaOH solution was added dropwise to the stirred polymaleic acid solution and the pH was monitored. The amount of NaOH added and the resulting pH recorded is detailed in Table 2 below.

Table 2 -

| pH | Grams of 50% NaOH |
|---|---|
| 0.77 | 0 |
| 1.24 | 1.31 |
| 1.65 | 2.1 |
| 1.83 | 2.58 |
| 2.45 | 3.04 |
| 2.56 | 3.36 |
| 2.89 | 4.25 |
| 3.16 | 5.15 |
| 3.27 | 5.6 |
| 3.44 | 6.21 |
| 3.67 | 7.03 |
| 3.77 | 7.41 |
| 3.84 | 7.69 |
| 3.93 | 8.03 |
| 3.98 | 8.26 |
| 4.01 | 8.35 |

The total amount of 50% NaOH added was 8.4 grams and the pH was 4. The solution formed a precipitate after about 30 minutes. This precipitate would not dissolve with additional stirring.

In a separate experiment, 40 grams of the same polymaleic acid solution was diluted with 40 grams of water. 8.4 grams of 50% NaOH was added dropwise. The resulting solution was clear and did not have any precipitate even after several days. This experiment indicates that polymaleic solutions need to be diluted to below 30 percent solids in order to be neutralized by a 50% NaOH solution without forming a precipitate.

Example 2 -

40 grams of a polymaleic sample with 43% solids and 8% residual maleic acid and a pH of 0.77 was neutralized with various amines. The amines used and the weight of these neutralizing agents are detailed in Table 3 below.

Table 3 -

| Grams of polymaleic acid solution (solids 43%) | Neutralizing agent | Amount of neutralizing agent used (grams) | Result |
|---|---|---|---|
| 40 | 28% $NH_4OH$ | 16 | Clear solution |
| 40 | Triethanolamine 99% | 17.6 | Clear solution |
| 40 | 2-amino-2-methyl-1-propanol | 24 | Clear solution |

These data indicate that the amines are good neutralizing agents since a precipitate is not formed.

Example 3 -

BaSO4 inhibition tests were conducted using the procedure described below:

**PART 1: SOLUTION PREPARATION**

Synthetic North Sea seawater (SW) brine was prepared as follows -

Prepare SW brine in DI water according to Table 4. Weigh all salts to +/-0.01 grams. Buffer the SW brine by adding 1 drop of acetic acid and then enough saturated sodium acetate solution to reach a pH of 6.1. Record amount added. Filter the brine through a 0.45 μm membrane filter under vacuum to remove any dust particles that may affect test reproducibility.

Table 4

| SW | |
|---|---|
| | g/L |
| NaCl | 24.074 |
| $CaCl_2 \cdot 2H_2O$ | 1.57 |
| $MgCl_2 \cdot 6H_2O$ | 11.436 |
| KCl | 0.877 |
| $Na_2SO_4$ | 4.376 |
| NOTE: Biological growth occurs in this solution due to sulfate content. Use within 1 week of making. | |

Standardized Forties formation water (FW) brine was prepared as follows -

Prepare FW brine in DI water according to Table 5. Weigh all salts to +/-0.01 grams. Buffer the FW brine by

adding 1 drop of acetic acid then enough saturated sodium acetate solution to reach pH 6.1. Record amount added. Filter the brine through a 0.45 μm membrane filter under vacuum to remove any dust particles that may affect test reproducibility.

Table 5 -

| FW | |
|---|---|
| | g/L |
| NaCl | 74.167 |
| $CaCl_2 \cdot 2H_2O$ | 10.304 |
| $MgCl_2 \cdot 6H_2O$ | 4.213 |
| KCl | 0.709 |
| $BaCl_2 \cdot 2H_2O$ | 0.448 |

A 1% (10,000 ppm) active polymer solution for each inhibitor tested was prepared as follows -
Calculate grams of polymer (g) required using the formula below.

$$g = (V \times C)/S$$

where
V is volume in mL of volumetric flask
C is concentration of polymer required (as weight %)
S is solids (active) content (in weight %) of the polymer

Weigh calculated grams of polymer into selected size volumetric flask and dilute with buffered, filtered seawater. For example, for a polymer with a solids content of 35%, to create 100mL of a 1 wt% (10,000 ppm) solution:

$$g = (100 \times 1)/35 = 2.857 \text{ g of polymer in 100mL of seawater}$$

Buffer solution was prepared as follows -
Prepare a buffer solution by adding 8.2g of anhydrous sodium acetate to 100g of DI water.

Quenching solution was prepared as follows -
Since barium sulfate forms readily on cooling, an effective dosage of scale inhibitor is required to prevent further precipitation after the test ends. Add 9g KCl to a 3L volumetric flask and dissolved with a small amount of DI water. Add 1 active wt % (~ 67.5grams) ALCOFLOW™ 615 polymer (scale inhibiting acrylics copolymer commercially available from Alco Chemical, Chattanooga, Tennessee). Dilute to 3L with DI water.

The amount of ALCOFLOW™ polymer added was computed as follows -

$$g = (3000 \times 1)/44.4 = 67.57\text{g of polymer in 3000mL}$$

**PART 2: TEST SETUP**

40mL glass vials were labeled with inhibitor name and concentration to be tested and numbered 1 through 30 samples. 15mL of DI water was added to each vial numbered 1-3. 5mL of SW was added to each vial numbered 4-30. A second set of 30 glass vials was labeled with "FW" and 15mL of FW was added to each vial. Vials 1-3 were used to show total ppm Ba available. Vials 4-6 were used to show ppm Ba without inhibitor treatment.

**PART 3: TEST PERIOD**

The incubator was turned on and set to 80°C. To each SW vial, 0.3mL of sodium acetate buffer solution was added. The appropriate amount of scale inhibitor solution was then added to SW vials 7-30 to give the desired concentration for 30mL of sample. DI water was added to vials 1-6 to keep the volume of each sample as close as possible. The amount to be added was calculated by finding the average amount of scale inhibitor solution added to the other

samples. The SW and FW vials were then placed into the incubator to heat.

The microliters amount of inhibitor solution (μl) required were calculated using the formula below -

$$\mu l = [(V_1 \times C_1)/C_2] \times 1000$$

where
$V_1$ is volume in mL of test sample (SW + FW)
$C_1$ is concentration of polymer desired (in ppm)
$C_2$ is concentration of active polymer in inhibitor solution

For example, suppose the desired test concentration is 50 ppm in a 30mL sample size (SW + FW). Using a 10,000 ppm (1%) polymer solution, the amount of inhibitor solution is -

$$\mu l = [(30 \times 50)/10{,}000] \times 1000 = 150\ \mu l$$

The solutions were heated for a minimum of 2 hours. At the end of 2 hours, one "FW" vial and the sample #1 labeled SW were mixed by pouring the contents of the "FW" vial into the treated SW. The sample 1 SW was then returned to the incubator/oven. When the 1st sample was mixed a timer was set. After 1 minute passed the next "FW" vial and labeled SW was mixed. This was repeated at 1 minute intervals until each sample had been mixed in sequential order.

After all samples were mixed, a set of test tubes was labeled 1-30 to be used in the filtration step. 5g +/- 0.02g of quenching solution was added to each test tube.

**PART 4: FILTRATION**

2 hours from the time the first sample was mixed, the test tube (#1) containing quenching solution was placed back onto the balance. SW vial #1 was removed from the incubator/oven and about 5mLs of solution was drawn into a 5 mL luer-lok syringe. The syringe was fitted with a 0.45 μm membrane syringe filter. Approximately 5g of solution was then filtered and added to the test tube containing quenching solution. The exact weight filtered was recorded for ppm calculations.

This process was then repeated with each sample at 1 minute intervals, so that each sample was under test conditions for 2 hours.

PART 5: ppm determination

Barium concentration was determined by ICP-OES (Inductively Coupled Plasma-Optical Emission Spectrometer). All samples were analyzed the day of the test. The percent inhibition was calculated using the following calculation -

$$\%\ \text{inhibition} = ((S^*d)-B)/(T-B)$$

where
S = ppm Ba in sample
d = dilution factor (grams filtrate +5 grams quenching solution)/ grams filtrate
B = ppm Ba in blank
T = ppm Ba in total

A polymaleic solution was tested in the barium sulfate inhibition test procedure described above. The polymaleic solution was neutralized to pH 3.5 before use with sodium hydroxide. The data in Table 7 indicate that polymaleic carboxylate oligomer is a very good barium sulfate scale control agent at concentrations of 50 ppm or greater.

Table 7 -

| Concentration of polymaleic solution (ppm) | % $BaSO_4$ inhibition |
|---|---|
| 10 | 0 |
| 25 | 19.4 |
| 50 | >90 |

(continued)

| Concentration of polymaleic solution (ppm) | % $BaSO_4$ inhibition |
|---|---|
| 100 | >90 |
| 150 | >90 |

Example 4 -

The compatibility of a mixed sodium and calcium salt of polyepoxysuccinic acid (PESA) at various pH as well as its product neutralized by various acids were tested in brine compositions described in Table 8 below.

Table 8 - Brine compositions utilized

| |
|---|
| Brine 1 = Synthetic seawater. 24.074g/L NaCl, 1.61g/L of $CaCl_2.2H_2O$, 11.436g/L of $MgCl_2.6H_2O$ |
| Brine 2 = Moderate Calcium brine. 25000ppm Na, 2500ppm Ca (63.53g/l NaCl and 9.19g/l $CaCl_2.2H_2O$) |
| Brine 3 = Severe Calcium brine. 50000ppm Na, 25000ppm Ca (127.05g/l NaCl and 91.875g/l $CaCl_2.2H_2O$) |

Table 9 - Brine compatibility of various PESA salts

| Carboxylated oligomer | Carboxylated oligomer concentration [ppm] | Brine Number (Table 8) | Observation after | | | |
|---|---|---|---|---|---|---|
| | | | 0 hours at 21°C | 1 hours at 60°C | 2 hours at 90°C | 24 hours at 90°C |
| Mixed salt of Na and Ca PESA at pH 13 | 250 | 1 | clear | clear | clear | clear |
| | 1000 | 1 | hazy | precipitate | precipitate | precipitate |
| | 5000 | 1 | precipitate | precipitate | precipitate | precipitate |
| | 25000 | 1 | hazy | precipitate | precipitate | precipitate |
| | 100000 | 1 | clear | cloudy | precipitate | precipitate |

(continued)

| Carboxylated oligomer | Carboxylated oligomer concentration [ppm] | Brine Number (Table 8) | Observation after | | | |
|---|---|---|---|---|---|---|
| | | | 0 hours at 21°C | 1 hours at 60°C | 2 hours at 90°C | 24 hours at 90°C |
| Mixed salt of Na and Ca PESA at pH 13 neutralized with citric acid to pH 9 | 250 | 1 | clear | clear | clear | clear |
| | 1000 | 1 | clear | clear | hazy | hazy |
| | 5000 | 1 | hazy | cloudy | cloudy | precipitate |
| | 25000 | 1 | clear | clear | clear | clear |
| | 100000 | 1 | clear | clear | clear | clear |
| | 250 | 2 | hazy | precipitate | precipitate | precipitate |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |
| | 250 | 1 | clear | clear | clear | clear |
| | 1000 | 1 | clear | clear | clear | clear |
| | 5000 | 1 | hazy | hazy | hazy | precipitate |
| | 25000 | 1 | clear | clear | clear | clear |
| | 100000 | 1 | clear | clear | clear | clear |
| | 250 | 2 | hazy | precipitate | precipitate | precipitate |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with citric acid to pH 7 | 250 | 1 | clear | clear | clear | clear |
| | 1000 | 1 | clear | clear | clear | clear |
| | 5000 | 1 | hazy | hazy | hazy | precipitate |
| | 25000 | 1 | clear | clear | clear | clear |
| | 100000 | 1 | clear | clear | clear | clear |
| | 250 | 2 | hazy | precipitate | precipitate | precipitate |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |

(continued)

| Carboxylated oligomer | Carboxylated oligomer concentration [ppm] | Brine Number | Observation after | | | |
|---|---|---|---|---|---|---|
| | | | 0 hours at 21°C | 1 hours at 60°C | 2 hours at 90°C | 24 hours at 90°C |
| Mixed salt of Na and Ca PESA at pH 13 neutralized with citric acid to pH 5 | 250 | 1 | clear | clear | clear | clear |
| | 1000 | 1 | clear | clear | clear | clear |
| | 5000 | 1 | clear | clear | clear | hazy |
| | 25000 | 1 | clear | clear | clear | clear |
| | 100000 | 1 | clear | clear | clear | clear |
| | 250 | 2 | clear | clear | precipitate | precipitate |
| | 5000 | 2 | cloudy | precipitate | precipitate | precipitate |
| | 250 | 3 | precipitate | precipitate | precipitate | precipitate |
| Mixed salt of Na and Ca PESA at pH 13 neutralized with methane sulfonic acid to pH 9 | 250 | 1 | clear | clear | clear | clear |
| | 1000 | 1 | clear | clear | clear | hazy |
| | 5000 | 1 | cloudy | cloudy | cloudy | precipitate |
| | 25000 | 1 | clear | clear | clear | clear |
| | 100000 | 1 | clear | clear | clear | clear |
| | 250 | 2 | hazy | hazy | precipitate | precipitate |
| | 5000 | 2 | cloudy | cloudy | precipitate | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with methane sulfonic acid to pH 7 | 250 | 1 | clear | clear | clear | clear |
| | 1000 | 1 | clear | clear | clear | hazy |
| | 5000 | 1 | cloudy | cloudy | cloudy | cloudy |
| | 25000 | 1 | clear | clear | clear | hazy |
| | 100000 | 1 | clear | clear | clear | hazy (yellow) |
| | 250 | 2 | hazy | hazy | hazy | precipitate |
| | 5000 | 2 | cloudy | cloudy | cloudy | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with methane sulfonic acid to pH 5 | 250 | 1 | clear | clear | clear | clear |
| | 1000 | 1 | clear | clear | clear | clear |
| | 5000 | 1 | clear | clear | clear | hazy |
| | 25000 | 1 | clear | clear | clear | clear |
| | 100000 | 1 | clear | clear | clear | hazy (orange) |
| | 250 | 2 | slightly hazy | precipitate | precipitate | precipitate |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |

(continued)

| Carboxylated oligomer | Carboxylated oligomer concentration [ppm] | Brine Number | Observation after | | | |
|---|---|---|---|---|---|---|
| | | | 0 hours at 21°C | 1 hours at 60°C | 2 hours at 90°C | 24 hours at 90°C |
| Mixed salt of Na and Ca PESA at pH 13 neutralized with HCl to pH 9 | 250 | 1 | clear | clear | clear | clear |
| | 1000 | 1 | clear | clear | clear | clear |
| | 5000 | 1 | cloudy | precipitate | precipitate | precipitate |
| | 25000 | 1 | clear | clear | clear | clear |
| | 100000 | 1 | clear | clear | clear | clear |
| | 250 | 2 | hazy | hazy | hazy | precipitate |
| | 5000 | 2 | cloudy | cloudy | cloudy | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with HCl to pH 7 | 250 | 1 | clear | clear | clear | clear |
| | 1000 | 1 | clear | clear | clear | hazy |
| | 5000 | 1 | cloudy | cloudy | precipitate | precipitate |
| | 25000 | 1 | clear | clear | clear | clear |
| | 100000 | 1 | clear | clear | clear | hazy |
| | 250 | 2 | clear | clear | clear | clear |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with HCl to pH 7 | 250 | 1 | clear | clear | clear | clear |
| | 1000 | 1 | clear | clear | clear | hazy |
| | 5000 | 1 | cloudy | cloudy | precipitate | precipitate |
| | 25000 | 1 | clear | clear | clear | clear |
| | 100000 | 1 | clear | clear | clear | hazy |
| | 250 | 2 | clear | clear | clear | clear |
| | 5000 | 2 | cloudy | precipitate | precipitate | precipitate |
| | 250 | 3 | precipitate | precipitate | precipitate | precipitate |
| | 5000 | 3 | precipitate | precipitate | precipitate | precipitate |
| Mixed salt of Na and Ca PESA at pH 13 neutralized with HCl to pH 5 | 250 | 1 | clear | clear | clear | clear |
| | 1000 | 1 | clear | clear | clear | hazy |
| | 5000 | 1 | hazy | precipitate | precipitate | precipitate |
| | 25000 | 1 | clear | clear | clear | clear |
| | 100000 | 1 | clear | clear | clear | clear |
| | 250 | 2 | slightly hazy | hazy | hazy | precipitate |
| | 5000 | 2 | cloudy | cloudy | cloudy | precipitate |
| | 250 | 3 | precipitate | precipitate | precipitate | precipitate |
| | 5000 | 3 | precipitate | precipitate | precipitate | precipitate |

(continued)

| Carboxylated oligomer | Carboxylated oligomer concentration [ppm] | Brine Number | Observation after | | | |
|---|---|---|---|---|---|---|
| | | | 0 hours at 21°C | 1 hours at 60°C | 2 hours at 90°C | 24 hours at 90°C |
| Mixed salt of Na and Ca PESA at pH 13 neutralized with glycolic acid to pH 9 | 250 | 1 | clear | clear | clear | clear |
| | 1000 | 1 | clear | clear | clear | clear |
| | 5000 | 1 | hazy | cloudy | precipitate | precipitate |
| | 25000 | 1 | clear | clear | clear | clear |
| | 100000 | 1 | clear | clear | clear | clear |
| Mixed salt of Na and Ca PESA at pH 13 neutralized with glycolic acid to pH 7 | 250 | 1 | clear | clear | clear | clear |
| | 1000 | 1 | clear | clear | clear | clear |
| | 5000 | 1 | cloudy | cloudy | cloudy | precipitate |
| | 25000 | 1 | clear | clear | clear | clear |
| | 100000 | 1 | clear | clear | clear | clear |
| Mixed salt of Na and Ca PESA at pH 13 neutralized with glycolic acid to pH 5 | 1000 | 1 | clear | clear | clear | clear |
| | 5000 | 1 | hazy | hazy | hazy | precipitate |
| | 25000 | 1 | clear | clear | clear | clear |
| | 100000 | 1 | clear | clear | clear | clear |

The data detailed in Table 9 indicate that the pH of the carboxylated oligomer solution needs to be in the pH range 2 to 10 and more preferably in the pH range 5 to 9 to be compatible in the brine solutions that are typically used in oil field applications for scale inhibition.

Example 5 -

A mixed sodium and calcium salt of polyepoxysuccinic acid at pH 13 as well as its product neutralized with citric acid was tested for Barium sulfate inhibition as described in Example 3. The data in Table 10 below indicates that carboxylated oligomers are very good barium sulfate inhibitors. These data also indicate that the concentration of the carboxylated oligomer needs to be greater than 20 ppm to achieve acceptable inhibition (greater than 80%).

Table 10 -

| Inhibitor | inhibitor concentration (ppm) | % Inhibition |
|---|---|---|
| Mixed salt of Na and Ca PESA at pH 13 neutralized with citric acid to pH 5 | 10 | 36 |
| Same as above | 25 | >90 |
| Same as above | 50 | >90 |
| Same as above | 100 | >90 |
| Same as above | 150 | >90 |

Although the present invention has been described and illustrated in detail, it is to be understood that the same is by way of illustration and example only, and is not to be taken as a limitation. The spirit and scope of the present invention are to be limited only by the terms of any claims presented hereafter.

The present invention also relates to the following embodiments:

1. Method of controlling scale in an aqueous system comprising:

adding to the aqueous system at least one carboxylated oligomer having the structure -

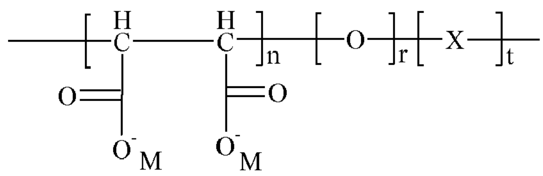

where X is COOM, M is H or a cation, n is 1 to 20, and r and t are independently 1 or 0;
wherein the concentration of the at least one carboxylated oligomer in the aqueous system is about 20 ppm or greater, and wherein the scale controlled is at least barium sulfate scale.

2. Method of controlling scale in an aqueous system according to embodiment 1 wherein the at least one carboxylated oligomer is chosen from polymaleic acid or polyether carboxylate or mixtures thereof.

3. Method of controlling scale in an aqueous system according to embodiment 1 wherein the aqueous system is in an oil field.

4. Method of controlling scale in an aqueous system according to embodiment 3 wherein the aqueous system contains brine.

5. Method of controlling scale in an aqueous system according to embodiment 3 further comprising adding the at least one carboxylated oligomer topside to production water.

6. Method of controlling scale in an aqueous system according to embodiment 5 further comprising reinjecting the production water into the oil field.

7. Method of controlling scale in an aqueous system according to embodiment 3 further comprising introducing the at least one carboxylated oligomer in a carrier fluid.

8. Method of controlling scale in an aqueous system according to embodiment 7 wherein the carrier fluid is methanol.

9. Method of controlling scale in an aqueous system according to embodiment 1 wherein the pH of the aqueous system is from about 2 to about 10.

10. Method of controlling scale in an aqueous system embodiment to claim 1 further comprising introducing the at least one carboxylated oligomer into the aqueous system as an aqueous solution that is free of precipitate.

11. Method of neutralizing a polymaleic acid aqueous solution containing greater than 0.1 weight percent maleic acid comprising:

diluting the polymaleic acid solution to less than 30 percent solids by weight, based on total weight of the polymaleic acid solution and adding an at least 45 weight percent alkaline hydroxide solution to the polymaleic acid solution, or adding an alkaline hydroxide solution having less than 30 percent solids to the polymaleic acid solution, the polymaleic acid solution having greater than 40 percent solids, or by adding an amine to the polymaleic acid solution such that the pH of the final solution is 2 or greater and the final solution does not have a precipitate.

12. Method of neutralizing a polymaleic acid aqueous solution according to embodiment 11 wherein the neutralized solution is free of precipitate or solids.

13. Method of neutralizing a polymaleic acid aqueous solution according to embodiment 11 wherein the alkaline hydroxide is sodium or potassium hydroxide.

14. Method of neutralizing a polymaleic acid aqueous solution according to embodiment 11 wherein the amine is chosen from ammonia, monoethanolamine, diethanolamine, triethanolamine, pyridine, piperazine, 2-amino-2-methyl-1-propanol and mixtures thereof.

15. Method of neutralizing a polymaleic acid aqueous solution according to embodiment 11 further comprising adding the neutralized solution to an aqueous system.

16. Method of neutralizing a polymaleic acid aqueous solution according to embodiment 15 wherein the neutralized solution is added to the aqueous system to inhibit scale.

17. Method of neutralizing a polymaleic acid aqueous solution according to embodiment 16 wherein the scale inhibited is halite, calcium sulfate, barium sulfate, strontium sulfate, iron sulfide, lead sulfide, zinc sulfide, calcium silicate and mixtures thereof.

18. Method of neutralizing a polymaleic acid aqueous solution according to embodiment 15 wherein the aqueous system contains brine.

19. Method of neutralizing a polymaleic acid aqueous solution according to embodiment 18 wherein the brine contains at least 35 grams per liter of salt.

20. Method of neutralizing a polymaleic acid aqueous solution according to embodiment 16 wherein the concentration of the neutralized polymaleic acid solution in the aqueous system is 20 ppm or greater.

## Claims

1. Method of controlling scale in an aqueous system comprising:

   adding to the aqueous system at least one polyether carboxylate selected from the group of polyepoxy succinic acid, 2,2-dioxy succinic acid, carboxymethyl oxysuccinic acid, epoxysuccinic acid and salts thereof,
   wherein the concentration of the at least one polyether carboxylate in the aqueous system is 20 ppm or greater, and wherein the scale controlled is at least barium sulfate scale.

2. Method of controlling scale in an aqueous system according to claim 1 wherein said polyether carboxylate is polyepoxy succinic acid.

3. Method of controlling scale in an aqueous system according to claim 1 wherein the aqueous system is in an oil field.

4. Method of controlling scale in an aqueous system according to claim 3 wherein the aqueous system contains brine.

5. Method of controlling scale in an aqueous system according to claim 3 further comprising adding the at least one polyether carboxylate topside to production water.

6. Method of controlling scale in an aqueous system according to claim 5 further comprising reinjecting the production water into the oil field.

7. Method of controlling scale in an aqueous system according to claim 3 further comprising introducing the at least one polyether carboxylate in a carrier fluid.

8. Method of controlling scale in an aqueous system according to claim 7 wherein the carrier fluid is methanol.

9. Method of controlling scale in an aqueous system according to claim 1 wherein the pH of the aqueous system is from 2 to 10.

10. Method of controlling scale in an aqueous system according to claim 1 further comprising introducing the at least one polyether carboxylate into the aqueous system as an aqueous solution that is free of precipitate.

Europäisches Patentamt
European Patent Office
Office européen des brevets

# EUROPEAN SEARCH REPORT

Application Number
EP 12 17 1984

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 5 409 062 A (BROWN J MICHAEL [US] ET AL) 25 April 1995 (1995-04-25)<br>* column 2, line 43 - line 53; claims *<br>----- | 1-10 | INV.<br>C02F5/10 |
| | | | TECHNICAL FIELDS SEARCHED (IPC) |
| | | | C02F |

The present search report has been drawn up for all claims

1

| Place of search | Date of completion of the search | Examiner |
| --- | --- | --- |
| Munich | 18 July 2012 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 12 17 1984

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2012

| Patent document cited in search report | Publication date | Patent family member(s) | Publication date |
|---|---|---|---|
| US 5409062 A | 25-04-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6063289 A
- US 6123869 A
- US 4654159 A
- US 5030751 A
- US 6020297 A
- US 5135677 A
- US 5064563 A
- US 4519920 A
- US 4555557 A
- US 4668735 A
- US 4589995 A
- US 4659793 A